Europäisches Patentamt

European Patent Office

Office européen des brevets

(19)

(11) Publication number: **0 377 237**
**A2**

## (12) EUROPEAN PATENT APPLICATION

(21) Application number: **89203190.7**

(22) Date of filing: **14.12.89**

(51) Int. Cl.⁵: **A23G 3/00**

(30) Priority: **21.12.88 GB 8829832**
**03.02.89 EP 89200238**

(43) Date of publication of application:
**11.07.90 Bulletin 90/28**

(84) Designated Contracting States:
**AT BE CH DE ES FR GB GR IT LI NL SE**

(71) Applicant: **UNILEVER NV**
**Burgemeester s'Jacobplein 1 P.O. Box 760**
**NL-3000 DK Rotterdam(NL)**
(84) **BE CH DE ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **Clarke, Thomas Cyril**
**9 Bromham Road, Biddenham**
**Bedford MK40 4AF(GB)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) **Low-calorie confectionery products.**

(57) The invention pertains to low-calorie confectionery products, wherein a substantial proportion of the conventional fat phase has been replaced by indigestible polyol fatty acid polyesters, at least 60 % by weight of the fatty acid composition whereof consists of lauric and/or stearic acids.

EP 0 377 237 A2

## LOW-CALORIE CONFECTIONERY PRODUCTS

The present invention relates to low-calorie confectionery products, and in particular to such products wherein a substantial proportion of the fat material consists of indigestible polyol fatty acid polyesters.

In confectionery products the characteristics of the fat material is particularly important. This fat material consists of so-called hard fats, which have the special property that at room temperature they are hard but melt quickly at body temperature, in particular at mouth temperature. The most important example of such a hard fat is cocoa-butter.

High raw material prices and the corresponding desire in industry to be less dependent on cocoa-butter as an almost sole source of hard fat suitable for the confectionery industry, have led to the development of alternative vegetable fats which can act as partial or full substitutes of cocoa-butter.

A well-known and widely used group of cocoa-butter substitutes are the so-called lauric cocoa-butter replacers, which are fully refined fats predominantly produced from palmkernel and/or coconut oil by means of fractionation, hydrogenation and/or interesterification. Although the physical properties of the lauric cocoa-butter replacers such as hardness, melting profile and flavour release, almost equal those of cocoa-butter, their physical properties are completely altered in blends with other fats, including cocoa-butter. Due to this characteristic the lauric cocoa-butter replacers are normally only used as full hard-fat substitutes, and are not blended with e.g. cocoa-butter in amounts of more than 5 to 10 %, calculated as a percentage of the fat phase. When blended in higher ratios, the resulting products become softer, less heat-resistant, waxy and have a greatly increased risk of fat-bloom, which is the formation of a grey/white surface layer on confectionery upon storage.

Two further less widely used groups of cocoa-butter substitutes can be distinguished: the non-lauric cocoa-butter replacers and the cocoa-butter equivalents. Although both groups suffer less from the drawback of poor compatibility with cocoa-butter, they are derived from selected, less available raw materials and their manufacture requires more careful and elaborate processing adversely influencing availability and price.

Particularly, in the western world there is an increased interest in food products having a reduced caloric content. In the area of confectionery products up to now the focus has been on the reduction of carbohydrates, in particular the sugar component, by using artificial or reduced-calorie sweeteners.

In the general area of low-calorie food products it has been suggested to reduce the caloric content of food products, in particular of the traditionally high-fat food products such as salad dressings, margarines, shortenings, and the like, by replacement of the triglyceride fats by non-adsorbable, non-digestible polyol fatty acid polyesters. Low-calorie food products comprising polyol fatty acid polyesters are disclosed in US 3,600,186.

In JP 62/205738 minor amounts of sucrose palmitate (0.5-3 % by weight of the fat phase) are suggested as crystal growth inhibitors in shortenings and chocolate compositions.

In US 3,093,481 polyol fatty acid polyesters such as sucrose octastearate and octapalmitate are suggested for inclusion into shortenings in amounts of upto 0.5 %. They are stated to have beneficial effects upon stability and consistency of the shortenings.

In US 2,886,438 chocolate mixes and shortenings comprising upto 5 % by weight of the fat of a fatty acid ester of an unsubstituted mono-alkylglucoside, such as ethylglucoside stearate are disclosed. The glucoside esters are stated to have beneficial effects upon consistency and appearance.

In EP 0 236 288 the suitability in food products of polyol fatty acid polyesters having a specific viscosity and stability profile, is described. Among the many types of food applications also chocolates and chocolate confections are mentioned.

In EP 0 271 951 there are disclosed cocoa-butter substitutes comprising sucrose fatty acid polyesters the fatty acid ester group composition of which is a combination of lauric and palmitic fatty acids, or, in the alternative, a combination of capric and stearic fatty acids.

In EP 0 285 187 there are disclosed reduced calorie chocolate confections comprising relatively steep-melting non-digestible fatty acid polyesters having a clear melting point of 30-36°C in combination with an artificial sweetener.

It has now been found that polyol fatty acid polyesters comprising a substantial proportion of a combination of laurate and stearate groups provide good hard-fat replacers suitable for use in confectionery products in amounts sufficient to provide significant calorie reduction. Inclusion of a substantial proportion of laurate and stearate allows greater processing flexibility without adverse effects upon melting profile and corresponding suitability as hard-fat substitutes in confectionery products. Confectionery products based upon such hard-fat substitutes can be better fine-tuned to speciality applications without giving rise to blooming and textural problems, and without the need of elaborate tempering.

Accordingly, it is an object of the present invention to provide confectionery products having reduced caloric contents.

It is a further object of the invention to provide confectionery products which do not suffer from fat blooming upon storage.

It is still a further object of the invention to provide confectionery products which allow increased production flexibility with respect to tempering.

Accordingly, the present invention provides low-calorie confectionery products, wherein a substantial proportion of the fat material consists of indigestible polyol fatty acid polyesters, at least 60 % by weight of the polyester fatty acid composition being a blend of lauric and stearic acids.

In this specification the term 'confectionery product' is intended to include all solid, edible fatty products conventionally comprising cocoa-butter or substitutes and/or replacers thereof, and in particular, chocolate products comprising cocoa material, which may be introduced in the form of any, optionally skimmed, cocoa powder, cocoa mass or chocolate liquor such as conventionally are used in chocolate manufacture.

The indigestible polyol fatty acid polyesters employed in the present invention are fatty acid polyesters derived from any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of the preferred sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and $\alpha$-methylglucoside. The sucrose polyol is preferred most.

The degree of conversion to polyester, which is defined as the percentage of polyol hydroxyl groups that, on an average, have been esterified with fatty acids, should be over 70 %, and preferably is over 85 or even 95 %.

For the purposes of the present invention by indigestibility is meant that at least about 70 % by weight of the material concerned is not digested by the human body.

At least 60 % by weight of the polyester fatty acid composition in the confectionery products of the invention should be a blend of lauric and stearic acids, amounts of 60, in particular 70, to 75 % being preferred. The weight ratio between the lauric and stearic fatty acids may vary relatively widely and in general will lie between 3:1 and 1:10. The weight ratios of lauric to stearic fatty acids preferably lie in the range of from 1:1 to 1:8.

The remaining part of the polyester fatty acid ester group composition is not particularly critical and may be derived from saturated or unsaturated fatty acids or sources thereof, having alkyl chain lengths within the range of from 8 to 24 carbon atoms. In general the bulk of the remaining part of the fatty acid composition will be myristic and/or palmitic derived.

In general fatty acids per se, lower alkylesters thereof or naturally occurring fats and oils may be used as source for the polyester fatty acids. Conventional techniques may be used to introduce the required fatty acid composition and degree of saturation. Suitable such techniques include full or partial hydrogenation, interesterification and fractionation, and may be used before or after conversion of the polyols to the corresponding polyol fatty acid polyesters.

Suitable sources of appropriate polyester fatty acids blends are the vegetable oils, in particular palm kernel, soybean and rapeseed oils hydrogenated to high levels of saturation. Preferably, mixtures of palm kernel and soybean oils are used. Alternatively, a preferred source of fatty acids is fractionated palm kernel oil to levels of lauric acid of over 50 % by weight.

Suitably up to 40 %, in particular up to 25 % by weight of the polyester fatty acid composition may be derived from unsaturated fatty acids or sources thereof.

The selection of the appropriate blend of polyester fatty acids is in particular determined by the required melting characteristics of the resulting polyol fatty acid polyester. A convenient way to define the melting characteristics of a fat or a fat-like substance is by its N-line. The N-line is the graph of $N_t$-values versus the temperature t. The $N_t$-value is conveniently measured by the nuclear magnetic relaxation technique and is a direct measure of the level of solid fat content at temperature t. This method is suitably described in Fette, Seifen, Anstrichmittel 80(5), 180-186 (1978). To some extent the measurement of $N_t$-values is dependent on the temperature profile used to prepare the samples for the NMR-measurement. For the purposes of the present invention the following preparatory temperature profile is adopted: 30 minutes at 60 °C, 90 minutes at 0 °C, 4 hours at 26 °C, again 90 minutes at 0 °C and finally 60 minutes at the temperature of the measurement, after which the NMR measurement is carried out.

Suitable polyol fatty acid polyesters for use in the low-calorie confectionery products in accordance with the invention have a N-line characterised by a $N_{20}$ of at least 55, particularly of at least 70, and a $N_{37}$ of below 10, in particular below 5.

Instead of a 'single' polyol fatty acid polyester, i.e. a polyester which is synthesized from a polyol and a source for the fatty acid residues in a single reaction, also a mixture or blend of polyol fatty acid polyesters, i.e. a blend of 'single' polyol fatty acid polyesters, may be used provided the overall fatty acid residues composition of the final blend is in accordance with the present invention.

The fat material of the low-calorie confectionery product in accordance with the present invention may consist solely of the polyol fatty acid polyester, or may be a mixture of the polyester and natural cocoa-butter or conventional cocoa-butter substitutes, provided such mixing does not result in a solids versus temperature profile substantially different from that indicated hereinbefore for the polyester. If a mixture is considered desirable, the amount of polyester should be at least 50 % by weight of the fat material in the confectionery product. To take full advantage of the low-calorie aspect the fat material preferably consists of at least 75 % and most preferably substantially completely consists of the polyol fatty acid polyester.

Low-calorie confectionery products in accordance with the present invention comprise in addition to the fat material conventional ingredients such as suitable flavouring, in particular introduced in the form of cocoa powder, chocolate liquor or cocoa mass, sugar, milk solids and emulsifier, such as in particular lecithin.

Suitable sugars include the common sugars, such as sucrose and raffinose. These conventional sugars may also be replaced by dietetic sweeteners such as sorbitol, fructose, xylitol and lactitol which provide confectionery products particularly suitable to avoid tooth decay or in diabetic diets. Such dietetic sweeteners are included in similar amounts as conventional sugars, i.e. in amounts of 30 to 55 % by weight of the final confectionery product. Inclusion of sorbitol and xylitol have the further advantage to increase the cool-melting sensation of the confectionery products.

It may be of particular advantage to use a low-calorie high-intensity sweetener in combination with the indigestible hard-fat substitute of the invention to provide confectionery products having an even further reduced caloric content. Suitable such high-intensity sweeteners include aspartame (phenylalanin), saccharin, cyclamate, sucralose, acesulfame-K, thaumatin and mixtures thereof. They are normally included in amounts of from 0.1 to 5 % by weight of the product. If so desired, the high-intensity sweeteners may also be used to top up reduced amounts of the common sugars or dietetic sweeteners. High-intensity sweeteners are generally supplemented to the amount of sweeteners they replace, by suitable low-calorie bulking agents, such as polydextrose.

For the purpose of increased cool-melting sensation also effective amounts of in particular dextrose can and preferably are included. Suitable amounts range from 5 to 30 % by weight of the final product.

Manufacture of the confectionery products in accordance with the present invention follows the conventional processing techniques in confectionery manufacture including mixing, milling, conching, and moulding. The improved crystallisation characteristics render strict control of tempering conditions superfluous.

## Claims

1. Low-calorie confectionery products, wherein a substantial proportion of the fat material consists of indigestible polyol fatty acid polyesters, at least 60 % by weight of the polyester fatty acid composition being a blend of lauric and stearic acids.